# EUROPEAN PATENT SPECIFICATION

(11) **EP 0 881 321 B1**
(45) Date of publication and mention of the grant of the patent: **02.02.2005**
(21) Application number: 98108854.5
(22) Date of filing: 15.05.1998
(51) Int. Cl.: D06M 11/47, D06M 11/79, D06M 13/08, D06M 15/21, D06M 11/45

(54) **Anti-flame agent used to fireproof synthetic micro-fibrous non-woven fabrics, a process for its preparation and the fireproof fabrics thus obtained**
Flammschutzmittel und dessen Verwendung zur flammhemmenden Ausrüstung von synthetischen, mikrofaserigen Vliesstoffen, Herstellungsverfahren und die so erhaltenen flammfesten Stoffe
Agent ignifuge utilisé pour des tissus ininflammables en microfibres synthètiques non tissées procédé pour sa préparation et tissus ininflammables obtenus

(30) Priority: 26.05.1997 IT MI971228
(43) Date of publication of application: 02.12.1998
(73) Proprietor: ALCANTARA S.p.A., 20138 Milano (IT)
(72) Inventor: Giuliacci, Ennio, 20138 Milano (IT); Baroni, Elisabetta, 50047 Prato (IT); Pastura, Graziano, 20138 Milano (IT); Bartolini, Mario, 50047 Prato (IT); Costantino, Rocco, 20138 Milano (IT); Cocci, Mario, 50047 Prato (IT); Piermattei, Alessandro, 20138 Milano (IT)
(74) Representative: Cioni, Carlo

(56) References cited:
- EP-A- 0 591 738
- WO-A-91/03822
- US-A- 5 393 569
- DATABASE WPI Week 9427 Derwent Publications Ltd., London, GB; AN 94-222133 XP002076400 & JP 06 157 849 A (DAINIPPON INK & CHEM KK)

## Description

The present invention relates to all anti-flame agent particularly useful in the treatment of non-woven fabrics, the process for its preparation and the non-woven fabrics rendered fireproof by treatment with the said anti-flame agent.

Micro-fibrous non-woven fabrics are known to the art, e.g. those marketed by ALCANTARA S.p.A.; products of this type are described in Italian Patents Nos. 823055, 839921, 858373, 873699, 905222, 921871 and the U.S. Patents Nos. US-A3531368 and US-A-3899623.

The non-woven fabrics must meet precise flame-resistant requirements in some applications e.g. furnishings and in some markets for almost all applications.

Essentially, three techniques are known for giving micro-fibrous fabrics the required fireproof characteristics. According to the first process (known as foulardaggio), the fabric is subjected to impregnation in a bath containing anti-flame additives and then dried. This process has the drawback of giving the fabric a suede texture which has hand and softness characteristics which are worse than the non-fireproofed fabric. Furthermore, the treatment is not permanent.

A second process known as "backside" coating provides for the application of a paste containing flame-retarding compounds - such as halogens, antimony and phosphorus -on the "wrong" side of the synthetic non-woven fabric. This method does not have the drawback of the foulardaggio in so far as the "right' side of the fabric is not involved in the treatment but given the quantity of flame-retarding compounds required to give the desired effect, the product so treated has a "harder" hand and thus poorer drapage than the non-treated product.

The third method forms the non-woven fabric from intrinsically fireproof polymer micro-fibers e.g. PET and a polyurethane solution either of or containing additives of antimony oxide or decabromodiphenyloxide, which impregnates the said substrate.

For istance, WO9103822 discloses how to make conductive a polymer by dispersing or distributing conductive filler into the polymer itself Among the plurality of materials than can be introduced into the polymer, decabromo diphenyl oxide and antimony trioxide has been mentioned too. In this way a flame retardant composition is obtained by introducing flame retardant additive into the micro fibre polymer and or polyurethane before the fabric preparation.

In such a way the starting polymer is transformed into a flame retardant product. The procedure to modify the polymer in order to obtain a flame retardant product has been utilised by the applicant, with unsatisfactory results due to the loss of some physical and aehestetic properties.

While conferring flame resistance, the combination of intrinsically fireproof fibers with the various quantities of additives to the polyurethane has a negative effect on the appearance (short nap, specking), on the drapage (hard hand), and on dying properties (tone) although the physical-mechanical performance remains within the specification values.

It is therefore advantageous to have an anti-flame additive for micro-fibrous non-woven fabrics of the synthetic-leather type which effectively renders such materials fireproof without negatively influencing the physical-mechanical characteristics or the aesthetic properties - hand or tone - of the treated product.

Such an aim is achieved by means of the present invention, which relates to a flame-retardant additive for synthetic micro-fibrous non-woven fabrics, of the type comprising a plurality of micro-fibers of a polymer material impregnated with polyurethane matrix, containing antimony trioxide and decabromodiphenyloxide which can exert its fireproofing effect by means of application on the "wrong" side of the fabric, in quantities and by ways which do not negatively influence the visual and hand characteristics of the treated material.

A first object, therefore, of the present invention is an anti-flame additive containing antimony trioxide and decabromodiphenyloxide in form of a concentrated aqueous suspension in which the size of particle which comprise the suspension is equal to or less than 5 micron and the additive contains further a carries comprising a clay or other adsorbent material such as alumina, silica, magnesium oxide or mixtures of inorganic oxides.

A process to prepare the said anti-flame additives containing the antimony tri-oxides and decabromodiphenyloxide and the support agent is a second object of the present invention.

A third object of the present invention is the process for rendering micro-fibrous non-woven fabric of a type such as synthetic leather fireproof by means of treatment with the anti-flame agent described above.

Under another aspect, the invention relates further to the micro-fibrous non-woven fabrics fireproofed by the above treatment.

The anti-flame additive according to the present invention comprises a mixture of antimony tri-oxides and decabromodiphenyloxide containing further a clay or other adsorbent material in a highly subdivided form with particle size less than 5 micron (µm).

The adsorbent support material may comprise clays, e.g. montmorillonite, faujasite, inorganic oxides e.g. aluminum oxide, magnesium oxide, silica or mixtures of these oxides. The adsorbent used may be of a type pre-treated to give it acidic or basic properties depending on the other components of the additive or on the materials on which it is to be applied.

The content of adsorbent support in the mixture of antimony tri-oxides and decabromodiphenyloxide may be from 0.05% to 5%.

The anti-flame additive according to the present invention may be obtained by mixing the components already reduced to the required granularity or by milling a mixture of the ingredients to the required granularity.

The anti-flame additive is applied to the "wrong" side of the micro-fibrous non-woven fabrics, preferably in the form of a concentrated aqueous suspension, in the presence of an organic binder such as acrylic or vinyl polymer.

The quantity of anti-flame additive according to the present invention necessary to fireproof non-woven fabric is significantly less than the quantity of conventional mixtures of antimony tri-oxides and decabromodiphenyloxide required to give the same degree of fireproofing. The quantity may vary from 15% to 60% of the weight of material treated, preferably from 20% to 40%. The high degree of subdivision of the anti-flame additive according to the invention, together with the dispersing and deflocculating action of the adsorbent support helps the said additive to penetrate into the fibres and thus improve the fireproofing characteristics.

It should be noted that the main characteristic of the anti-flame additive according to the invention is that it can be used in large quantities, giving a high degree of fireproofing properties to the treated material, without reducing the softness to the touch or aesthetic characteristics of the product.

Another characteristic of the anti-flame additive according to the invention is its high stability which permits storage for a long time in the form of aqueous suspension.

The high degree of subdivision of the anti-flame additive allows h to adhere very well to the treated material and this produces products which do not show the "powdering" phenomenon, where the additive is shed.

Although the anti-flame additive according to the invention may be used to fireproof any type of fabric, its use is particularly advantageous in the field of materials comprising micro-fibrous non-woven fabrics.

The process for applying the additive to non-woven fabrics may be the traditional spreading using a doctor blade. It has been found that a cylindrical "offset roller" spreading process obtains particularly good results where the "wrong" side of the fabric is coated from bottom to top by a cylinder laying down a quantity of resin. Varying the distance between the applying roller and the transferring roller regulates the quantity of resin applied.

The cylinder spreading process according to the invention uses the following schematic stages or elements:
a) Driver unit for the roll of micro-fibrous non-woven fabric to be treated and vacuum system to clean the surface to be treated.
b) The actual offset roller application unit comprising.
   1) Trough with automatic level control fed by a pump from the tank containing the anti-flame material to be spread.
   2) A system of cylinders, in particular, the off-set feed cylinder, the transferring cylinder which regulates the thickness of material spread, and the pressure cylinder which regulates the penetration of the resin.
c) Drying, Cooling and Treated-Material Winding units.

The following examples illustrate the advantages afforded by the use of the anti-flame additive according to the invention on various types of material. These examples are by way of illustration only and do not limit the application of the present invention.

The tests of the resistance to combustion and speed of combustion were carried out on treated samples of composite materials, non-woven fabrics, and on the same materials paired with cotton and polyester fabrics, with fireproof fabrics, with foam.

The application of the additive was carried out following suspension of the additive comprising 40% decabromodiphenyloxide and 20% antimony trioxide in water in the presence of 30% of acrylic binder. The quantity of additive suspension applied was such as to obtain the required quantity of additive in the final dried product. Four different types of additive have been used. All the additives tested were produced by the firm SUPEROLANZ, under the commercial name of CABERTBX DB. The additive identified as DB1 in the present description comprises particles greater than 10 micron (µm).

The additive identified as DB1 in the present description comprises particles greater than 10 micron (µm). The additive identified as DB2 comprises subdivided material with particles between 5 and 10 micron (µm). The additive identified as DB3 comprises particles less than 5 micron (µm). The additive according to the invention identified as DBX comprises particles less than 5 micron (µm) and contains 2% of hydrophilic montmorillonite clay. The tests with additives DB1, DB2, and DB3 were conducted as comparisons.

The following indicate the criteria and methods used to test the samples of the treated materials.

### Hand

A score of from 1 to 4 was given, where 4 is the score of non-treated material and 1 was that given to the material with the worst softness characteristics.

### Penetration (Visual Aspect)

Three levels were recognized: poor (s), sufficient (sf), good (b)

### Binder Compatibility

This is the ability of the additive to mix with the binder. Three levels were recognized: poor (s), sufficient (sf), good (b) Compound Stability

Indicates the stability of the compound with time. (n) indicates the additive was not stable, (b) indicates good stability.

### Powdering

The measure of the tendency of the test piece to shed additive. (p)indicates a tendency to shed powder, (a) indicates absence of powdering.

### Resistance to Fire

Resistance to fire was determined by the RF1 method and consisted in determining the post-combustion and post-incandescence time, the area damaged and the dripping of a test piece stretched and suspended vertically with a U-shaped support, whose free lower limb is exposed to flame according to the CSE RF 1/761A standard.

The products tested are divided into categories starting from 1a (high resistance to flame).

### Speed of Combustion

Expressed in millimeters per minute (mm/min) and determined using the FMVSS 302 method, which consists in determining the speed of combustion according to the UNIISSO 3795 of a test piece stretched and suspended horizontally with a U-shaped frame, whose free lower limb is exposed to a flame of low energy.

The results of the tests are shown in Table A. in which the data obtained is the average of tests carried out on various non-woven fabrics, micro-fibrous as such and micro-fibrous fabrics paired with supports, treated with equivalent quantities of anti-flame additive.

As can be seen from the Table, the treatment of the composite material, micro-fibrous, non-woven fabric with additive according to the invention, other than influencing the properties of the product in a small way, gives better anti-flame properties for the same quantity of additive used.

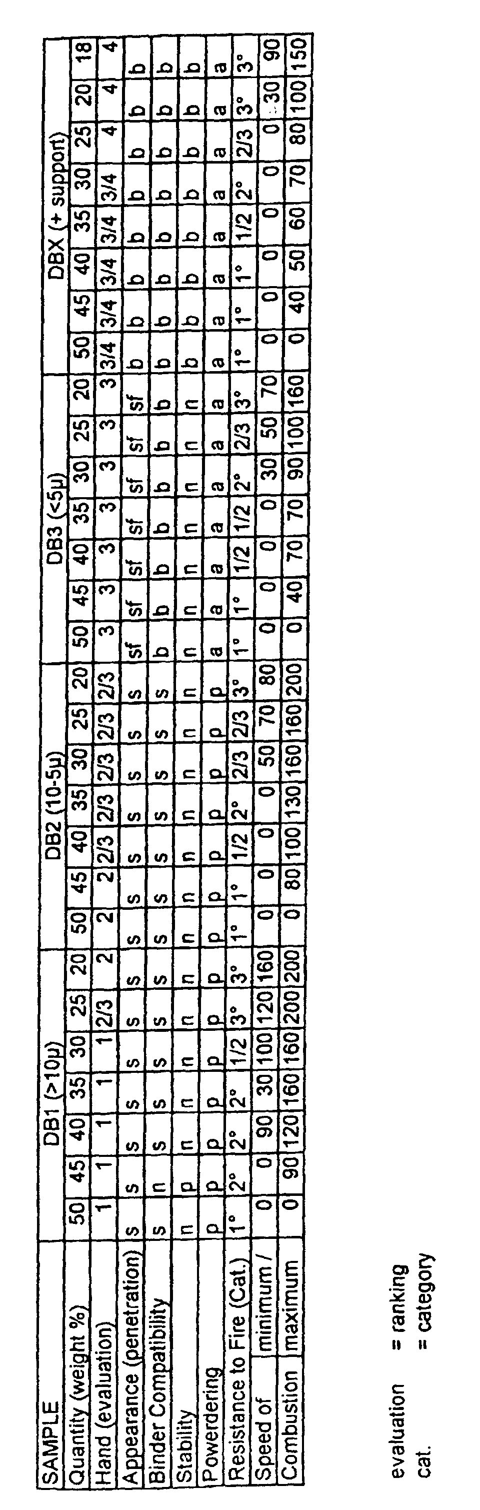

## Claims

1. Flame retardant additive for micro-fibrous non-woven fabric containing antimony trioxide and decabromodiphenyloxide, in form of a concentrated aqueous suspension **characterized in that** the size of particle which comprise the suspension is equal to or is less than 5 micron (µm) and the additive contains further a carrier comprising a clay or other adsorbent material such as magnesium oxide, aluminum oxide, silica or mixtures of the said oxides.

2. Flame retardant additive for micro-fibrous non-woven fabric according to Claim 1, **characterized in that** the clay is hydrophilic montmorillonite.

3. Flame retardant additive for micro-fibrous non-woven fabric according to Claim 1, **characterized in that** the clay is treated to reduce the alkalinity.

4. Flame retardant additive for micro-fibrous non-woven fabric according to Claim 1, **characterized in that** the ratio between antimony tri-oxide and decabromodiphenyloxide being between 1 and 2.

5. Flame retardant additive for micro-fibrous non-woven fabric according to Claim 1, **characterized in that** the quantity of adsorbent support is between 0.05% and 5% of the weight of the entire additive.

6. Flame retardant additive for micro-fibrous non-woven fabric according to Claim 1, **characterized in that** it contains either an acrylic or vinyl polymer binder.

7. Process for treating micro-fibrous non-woven fabric material with the flame-retarding additive according to each one of the preceding Claims, **characterized in that** a suspension of the additive in water is spread on the "wrong" surface of the fabric by means of an offset cylinder spreader.

## Patentansprüche

1. Flammschutzmitteladditiv für mikrofaserigen Vliesstoff enthaltend Antimontrioxid und Decabromdiphenyloxid in Form einer konzentrierten wässrigen Suspension **dadurch gekennzeichnet, dass** die Partikelgröße, welche die Suspension umfassen, gleich oder weniger als 5 Mikrometer (µm) ist und das Additiv ferner einen Träger enthält, der einen Ton oder anderes adsorbierendes Material wie z. B. Magnesiumoxid, Aluminiumoxid, Silica oder Mischungen der Oxide umfasst.

2. Flammschutzmitteladditiv für mikrofaserigen Vliesstoff gemäß Anspruch 1, **dadurch gekennzeichnet, dass** der Ton hydrophiles Montmorillonit ist.

3. Flammschutzmitteladditiv für mikrofaserigen Vliesstoff gemäß Anspruch 1, **dadurch gekennzeichnet, dass** der Ton behandelt wird um die Basizität zu reduzieren.

4. Flammschutzmitteladditiv für mikrofaserigen Vliesstoff gemäß Anspruch 1, **dadurch gekennzeichnet, dass** das Verhältnis zwischen Antimontrioxid und Decabromdiphenyloxid zwischen 1 und 2 liegt.

5. Flammschutzmitteladditiv für mikrofaserigen Vliesstoff gemäß Anspruch 1, **dadurch gekennzeichnet, dass** die Menge des adsorbierenden Trägers zwischen 0,05 % und 5 % des Gewichts des gesamten Additivs beträgt.

6. Flammschutzmitteladditiv für mikrofaserigen Vliesstoff gemäß Anspruch 1, **dadurch gekennzeichnet, dass** es entweder ein acrylisches oder vinylisches Polymerbindemittel enthält.

7. Verfahren zur Behandlung von mikrofaserigem Vliesstoff-Material mit dem Flammschutzmitteladditiv gemäß einem beliebigen der voranstehenden Ansprüche, **dadurch gekennzeichnet, dass** eine Suspension des Additivs in Wasser auf die "falsche" Oberfläche des Stoffes mit Mitteln eines offset Zylinderspritzgerätes (offset cylinder spreader) aufgesprüht wird.

## Revendications

1. Additif ignifuge pour textile non-tissé en micro-fibre contenant du tri-oxyde et du décabromodiphényloxyde d'antimoine, sous la forme d'une suspension aqueuse concentrée, **caractérisé en ce que** la taille des particules qui composent la suspension est inférieure ou égale à cinq microns (µm) et **en ce que** l'additif contient en outre un support comprenant une argile ou une autre matière absorbante telle que de l'oxyde de magnésium, de l'oxyde d'aluminium, de la silice ou des mélanges desdits oxydes.

2. Additif ignifuge pour textile non-tissé en micro-fibre selon la revendication 1, **caractérisé en ce que** l'argile est de la montmorillonite.

3. Additif ignifuge pour textile non-tissé en micro-fibre selon la revendication 1, **caractérisé en ce que** l'argile est traitée pour réduire l'alcalinité.

4. Additif ignifuge pour textile non-tissé en micro-fibre selon la revendication 1, **caractérisé en ce que** le rapport entre le tri-oxyde et le décabromodiphényloxyde d'antimoine est compris entre 1 et 2.

5. Additif ignifuge pour textile non-tissé en micro-fibre selon la revendication 1, **caractérisé en ce que** la quantité de support absorbant est comprise entre 0,05% et 5% du poids total de l'additif.

6. Additif ignifuge pour textile non-tissé en micro-fibre selon la revendication 1, **caractérisé en ce qu'**il contient un liant à base de polymère soit acrylique, soit vinylique.

7. Procédé de traitement d'un textile non-tissé en micro-fibre avec l'additif ignifuge selon l'une quelconque des revendications précédentes, **caractérisé en ce qu'**une suspension de l'additif dans l'eau est appliquée sur la face d'envers du textile au moyen d'un cylindre applicateur d'offset.
